# EUROPÄISCHE PATENTSCHRIFT

(11) **EP 2 406 847 B1**
(45) Veröffentlichungstag und Bekanntmachung des Hinweises auf die Patenterteilung: **14.09.2016**
(21) Anmeldenummer: 10702852.4
(22) Anmeldetag: 27.01.2010
(51) Int. Cl.: H01M 8/24, H01M 8/04, H01M 8/10

(54) **BRENNSTOFFZELLENANORDNUNG UND VERFAHREN ZUM BETREIBEN EINER BRENNSTOFFZELLENANORDNUNG**
FUEL CELL ASSEMBLY AND METHOD FOR OPERATING A FUEL CELL ASSEMBLY
AGENCEMENT DE PILES À COMBUSTIBLE ET PROCÉDÉ DE FONCTIONNEMENT D'UN AGENCEMENT DE PILES À COMBUSTIBLE

(30) Priorität: 16.02.2009 EP 09152893
(43) Veröffentlichungstag der Anmeldung: 18.01.2012
(73) Patentinhaber: Siemens Aktiengesellschaft, 80333 München (DE)
(72) Erfinder: ILLNER, Dieter, 91058 Erlangen (DE); LERSCH, Josef, 91336 Heroldsbach (DE); MATTEJAT, Arno, 91056 Erlangen (DE); STÜHLER, Walter, 96114 Hirschaid (DE); TARDIVO, Franco, 91056 Erlangen (DE); VOITLEIN, Ottmar, 91475 Lonnerstadt (DE)
(86) Internationale Anmeldenummer: PCT/EP2010/050906
(87) Internationale Veröffentlichungsnummer: WO 2010/091952

(56) Entgegenhaltungen:
- EP-A- 1 223 631
- EP-A- 1 519 436
- DE-A1- 10 049 801
- DE-A1-102004 049 127
- JP-A- 2 021 573
- US-A- 3 964 929
- US-A1- 2003 193 009

## Beschreibung

Die Erfindung betrifft eine Brennstoffzellenanordnung und ein Verfahren zum Betreiben einer solchen umfassend mindestens eine Brennstoffzelleneinrichtung mit mindestens einer Brennstoffzelle auf Basis eines Feststoffelektrolyten, wobei mindestens zwei Anschlusskontakte zum Abgreifen einer von der Brennstoffzelleneinrichtung erzeugten elektrischen Spannung vorhanden sind, zwischen welchen die mindestens eine Brennstoffzelle angeordnet ist, wobei mindestens eine Baugruppe vorhanden ist, welche mindestens ein elektrisch leitfähiges Bauteil und mindestens ein weiteres Bauteil aufweist, wobei das mindestens eine weitere Bauteils zwischen einem ersten der Anschlusskontakte und dem mindestens einen elektrisch leitfähigen Bauteil auf der, der mindestens einen Brennstoffzelle abgewandten Seite des ersten Anschlusskontakts angeordnet ist und eine geringere elektrische Leitfähigkeit aufweist als diese, und wobei mindestens ein Versorgungskanal zum Transport eines fluiden Mediums vorhanden ist, der den ersten Anschlusskontakt mit dem mindestens einen elektrisch leitfähigen Bauteil durch das mindestens eine weitere Bauteil hindurch verbindet.

Aus der WO 03/030287 A2 ist eine Brennstoffzelleneinrichtung bekannt, die einen Stapel planarer Brennstoffzellen und weiterhin eine Baugruppe in Form einer Befeuchtungseinrichtung aufweist, welche einen Stapel planarer Befeuchtungszellen umfasst.

In einer Brennstoffzelle wird durch die elektrochemische Verbindung von Wasserstoff und Sauerstoff an einem Elektrolyten elektrischer Strom mit hohem Wirkungsgrad erzeugt. Als ein den Wasserstoff bereitstellendes Brenngas wird reiner Wasserstoff, ein wasserstoffhaltiges Gasgemisch (Reformergas) oder ein gasförmiger Kohlenwasserstoff, wie beispielsweise Methan, eingesetzt. Als ein den Sauerstoff bereitstellendes Oxidationsgas wird reiner Sauerstoff oder ein sauerstoffhaltiges Gas, wie beispielsweise Luft, eingesetzt. Am Elektrolyten erfolgt mit reinem Wasserstoff und reinem Sauerstoff eine Reaktion zu Wasser (H₂O) ohne dass eine Emission von Schadstoffen erfolgt. Die technische Umsetzung des Prinzips einer Brennstoffzelle hat zu unterschiedlichen Lösungen, und zwar mit verschiedensten Elektrolyten und Betriebstemperaturen zwischen 60°C und 1000°C geführt. So werden flüssige Elektrolyte wie auch Feststoffelektrolyte eingesetzt. In Abhängigkeit von ihrer Betriebstemperatur werden Brennstoffzellen in Nieder-, Mittel- und Hochtemperatur-Brennstoffzellen eingeteilt, die sich wiederum durch verschiedene technische Ausführungsformen voneinander unterscheiden.

Eine einzelne Brennstoffzelle liefert eine Betriebsspannung von maximal etwa 1,1 V. Daher wird eine Vielzahl von Brennstoffzellen zu einer Brennstoffzelleneinrichtung aufeinander und/oder nebeneinander gestapelt. Durch ein in Reihe schalten der einzelnen Brennstoffzellen wird eine Betriebsspannung von 100 V oder mehr erreicht.

Als "planare Brennstoffzelle" wird hier und nachfolgend eine solche bezeichnet, die einen planaren bzw. scheiben-, platten- oder folienförmigen Feststoffelektrolyten umfasst, an dessen eine Seite eine schichtförmige Anode und an dessen andere Seite eine schichtförmige Kathode angrenzen. Die beiden Elektroden bilden zusammen mit dem Elektrolyten eine sogenannte Elektrolyt-Elektroden-Einheit. Angrenzend an die Anode ist ein Anodengasraum angeordnet, in welchen das Brenngas eingeleitet wird. Angrenzend an die Kathode ist ein Kathodengasraum angeordnet, in welchen das Oxidationsgas eingeleitet wird.

Zwischen dem Anodengasraum einer planaren Brennstoffzelle und dem Kathodengasraum einer benachbart angeordneten planaren Brennstoffzelle ist üblicherweise eine Bipolarplatte angeordnet. Die Bipolarplatte stellt eine elektrisch leitende Verbindung zwischen der Anode der erstgenannten Brennstoffzelle und der Kathode der benachbarten Brennstoffzelle her. In Abhängigkeit von der Art der Brennstoffzelle ist eine Bipolarplatte beispielsweise in Form einer metallischen Platte oder als ein Kühlelement, welches zwei aufeinander gestapelte Platten mit einem dazwischen liegenden Kühlwasserraum umfasst, ausgestaltet. Je nach Ausführungsform der Brennstoffzellen befinden sich in einer Brennstoffzelleneinrichtung weitere Bauelemente, wie beispielsweise elektrisch leitende Schichten, Dichtungsanordnungen oder Druckkissen.

Die Brennstoffzellen einer Brennstoffzelleneinrichtung werden während ihres Betriebs stetig mit Brenngas und Oxidationsgas versorgt. Manche Ausführungsformen von Niedertemperatur-Brennstoffzellen, insbesondere Brennstoffzellen mit einer Polymer-Elektrolyt-Membran (PEM-Brennstoffzellen), benötigen zum Betrieb befeuchtete Betriebsgase. Diese Betriebsgase werden in einer geeigneten Einrichtung, wie beispielsweise einer Befeuchtungseinrichtung in Form eines Flüssigkeitsringverdichters oder eines Membranbefeuchters, mit Wasserdampf befeuchtet. Ein Membranbefeuchter umfasst üblicherweise eine wasserdurchlässige Membran, welche einem Gasraum von einem Befeuchtungswasserraum trennt. Als Befeuchtungswasser, welches durch den Befeuchtungswasserraum geleitet wird, wird häufig Kühlwasser aus den Brennstoffzellen verwendet. Das auf die Temperatur der Brennstoffzellen aufgeheizte Kühlwasser strömt durch den Befeuchtungswasserraum, durchdringt die wasserdurchlässige Membran und befeuchtet das Brenn- und/oder das Oxidationsgas auf einen annähernd 100%-igen Befeuchtungsgrad. Anschließend werden die befeuchteten Gase den Brennstoffzellen zugeleitet. Nachdem aufgrund der Verdampfung des Befeuchtungswassers von der wasserdurchlässigen Membran in dem Gasraum hinein Wärme aus dem Brenn- oder Oxidationsgas als Verdampfungswärme verbraucht wird, sinkt dessen Temperatur in oft erheblichem Umfang.

Um die Temperatur des Brenn- und/oder Oxidationsgases annähernd gleich zu halten, wird daher in einer Befeuchtungseinrichtung einer wasserdurchlässigen Membran häufig mindestens ein Heizelement zugeordnet. Ein Heizelement ist häufig so ausgestaltet, dass das Brenngas oder Oxidationsgas während des Befeuchtungsvorgangs am Heizelement entlang strömt und auf annähernd die Temperatur der Brennstoffzellen gebracht oder dort gehalten wird. Ein Heizelement wird dabei in besonders einfacher Weise auf die Temperatur der Brennstoffzellen gebracht, indem es vom Kühlwasser aus den Brennstoffzellen durchströmbar ausgestaltet ist. Hierzu weist die Brennstoffzelleneinrichtung meist mindestens einen Versorgungskanal zum Durchleiten von Kühlwasser auf, welches dabei auf die Temperatur der Brennstoffzellen aufgeheizt wird.

Anschließend wird das aufgeheizte Kühlwasser durch ein Heizelement geleitet, wobei das an dem Heizelement entlang streichende Brenngas und/oder Oxidationsgas auf annähernd die Temperatur der Brennstoffzellen gebracht wird. In besonders einfacher Weise wird auch die Temperatur des Befeuchtungswassers an die der Brennstoffzellen angepasst, wenn ein Teil des aufgeheizten Kühlwassers aus den Brennstoffzellen als Heizwasser für das Heizelement und ein anderer Teil des aufgeheizten Kühlwassers als Befeuchtungswasser in den Befeuchtungswasserraum geleitet wird. Der Versorgungskanal für Kühlwasser, welcher die Brennstoffzelleneinrichtung durchzieht, wird somit derart angeordnet, dass das hindurchgeleitete aufgeheizte Kühlwasser in Folge das Heizelement oder die Heizelemente des Membranbefeuchters sowie den oder die Befeuchtungswasserräume des Membranbefeuchters durchläuft. Als besonders platzsparende Heizelemente haben sich Metallbleche, in oder zwischen denen ein Heizwasserraum ausgebildet wird, erwiesen.

Eine Brennstoff zellenanordnung, welche eine Brennstoffzelleneinrichtung und zumindest eine weitere Baugruppe umfasst, ist üblicherweise gegenüber ihrer Umgebung elektrisch isoliert ausgebildet, so dass der mit der Brennstoffzelleneinrichtung erzeugte Strom lediglich über die gewünschten Lastanschlüsse bzw. Anschlusskontakte zu dem oder den Verbrauchern geleitet wird. Häufig werden die Anschlusskontakte von elektrisch leitfähigen, insbesondere metallischen Polplatten bereitgestellt. Die Güte der elektrischen Isolierung wird dabei durch die Größe eines Isolationswiderstandes zwischen einzelnen Bauteilen einer Brennstoffzellenanordnung, die Spannung führen, und solchen Elementen der Brennstoffzellenanordnung, die keine Spannung führen, beschrieben. Über diesen Isolationswiderstand fließt ein geringer Strom, der sogenannte Leckstrom, der normalerweise keinen Schaden anrichtet, jedoch zu einem messbaren Spannungsabfall führen kann. Ein Isolationswiderstand kann dabei beispielsweise durch ein Bauteil aus Kunststoff, Keramik, textilem Material und dergleichen, die in der Regel als Isolatoren wirken, bestimmt sein.

Der Isolationswiderstand kann dabei durch Medien, welche die Brennstoffzellenanordnung mit Betriebsgasen, Kühlwasser und dergleichen versorgen, beeinflusst werden, sofern es sich um elektrische Leiter handelt, über welche ein merklicher Leckstrom fließen kann. Ein merklicher Leckstrom entwickelt sich beispielsweise über Medien, die Wasser oder Wasserdampf umfassen. Bei einem entsprechend hohen Spannungsabfall kann die Spannung das Korrosionspotential von elektrisch leitfähigen, insbesondere metallischen, Werkstoffen erreichen, welche mit einem solchen Medium in Kontakt stehen, so dass elektrisch leitfähige Bauteile aus diesen Werkstoffen durch Korrosion angegriffen oder zerstört werden. Weiterhin bilden sich dadurch Korrosionsprodukte aus, welche gegebenenfalls in an das korrodierte Bauteil angrenzenden Versorgungskanälen durch ein darin strömendes Medium weitergetragen werden und an anderer Stelle zu Verstopfungen oder sonstigen unerwünschten Nebenwirkungen führen. Dies ist insbesondere bei einer Brennstoffzellenanordnung mit einer internen Verteilerstruktur (internally manifolded stack) von Nachteil, da die Versorgungskanäle nicht ohne weiteres von außen zugänglich sind oder gereinigt werden können. Die Menge an gebildeten Korrosionsprodukten hängt dabei von der Höhe des Leckstroms ab, wobei unter Umständen bereits ein Leckstrom im Bereich weniger mA zur Bildung von merklichen Mengen an unerwünschten Korrosionsprodukten führt.

Um die korrosiven Auswirkungen eines auftretenden Leckstroms zu verhindern oder zu mindern, wurden bisher konstruktive Maßnahmen eingesetzt. Im Falle, dass der Leckstrom durch ein wässriges Medium wie beispielsweise Kühlwasser fließt, wird beispielsweise der Querschnitt des Versorgungskanals, durch welches das wässrige Medium geleitet wird, möglichst klein und seine Länge möglichst groß gewählt. Zudem wird der das wässrige Medium begrenzende Oberflächenbereich des Versorgungskanals oder das Material zur Bildung des Versorgungskanals aus einem elektrisch isolierenden Material gebildet. Derartiges ist allerdings nur dann mit vertretbarem Aufwand ausführbar, wenn beispielsweise Rohre oder dergleichen den Versorgungskanal begrenzen. Bei Versorgungskanälen mit unregelmäßigem oder wechselndem Kanalquerschnitt ist dies nicht oder nur mit großem Aufwand anwendbar.

Die US 3,964,292 beschreibt ein Kühlsystem für eine Brennstoffzelle, bei welchem ein Leckstrom über die Kühlmittelleitungen minimiert werden soll, indem das Kühlsystem in viele kleine Teilabschnitte aufgeteilt und diese auf Zwischenpotentialen angeschlossen werden. Wie oben bereits ausgeführt, führen die verbleibenden Potentialunterschiede innerhalb eines Brennstoffzellenstapels zu unerwünschten Korrosionserscheinungen.

Die DE 100 49 801 A1 offenbart eine Brennstoffzellenvorrichtung, welche durch die Verbindung von vier Brennstoffzellenstapeln über einen Zuführ-/Abführkasten ausgebildet ist. Eine Kühlwasser-Zuführöffnung und eine Kühlwasser-Abführöffnung sind durch ein Kabel kurzgeschlossen, wodurch die elektrische Potentialdifferenz zwischen diesen beseitigt wird. Dadurch wird ein Stromfluss innerhalb des Kühlwassers selbst verhindert. Ein Stromfluss aufgrund einer Potentialdifferenz tritt hier zwischen der Kühlwasser-Zuführöffnung und der Kühlwasser-Abführöffnung auf. Der Rest des Kühlwassersystems ist elektrisch geschirmt.

US 2003/0193009 A1 offenbart eine Vorrichtung zur Überwachung des Spannungspotentials zwischen zwei Stellen eines Brennstoffzellenkühlsystems, ohne dabei die Spannung zu verändern.

JP 02-021573 A1 beschreibt eine Brennstoffzelle, bei der ein Versagen-einer elektrischen Isolation auftreten kann. Bei einem Auftreten eines solchen Versagens wird die betreffende Zelle über das versagende Bauteil, Leitungen, den Kühler und die Reaktionsgasverteilung kurzgeschlossen. Das Entstehen eines Kurzschlussstroms wird durch einen Widerstand verhindert. Ein Potentialausgleich ist nicht vorgesehen.

DE 10 2004 049 127 A1 offenbart eine Vorrichtung zur Bestimmung der Leitfähigkeit eines Kühlmediums eines Brennstoffzellensystems, umfassend eine vom Kühlmedium durchströmte Brennstoffzelle mit elektrischen Polen und einen mit diesen Polen elektrisch verbundenen Wechselrichter zur Umwandlung des von der Brennstoffzelle erzeugten Gleichstroms in Wechselstrom, wobei mindestens mit dem Kühlmedium in Verbindung stehende Teile der Brennstoffzelle zum Potentialausgleich mit einem gleichen elektrischen Masseanschluss verbunden sind.

Es ist Aufgabe der Erfindung, eine verbesserte Brennstoffzellenanordnung sowie ein verbessertes Verfahren zum Betreiben einer Brennstoffzellenanordnung bereitzustellen, bei denen ein Auftreten von Korrosion aufgrund eines Leckstroms vermieden oder vermindert werden kann.

Die Aufgabe wird für die Brennstoffzellenanordnung nach Anspruch 1 und für das Verfahren nach Anspruch 11 zum Betreiben einer, insbesondere der erfindungsgemäßen, Brennstoffzellenanordnung gelöst.

Durch die Anpassung des elektrischen Potentials am mindestens einen elektrisch leitfähigen Bauteil an das elektrische Potential am ersten Anschlusskontakt wird die Ausbildung eines Leckstroms zwischen diesen verhindert oder zumindest im Wesentlichen verhindert, so dass das Korrosionspotential der elektrisch leitenden, insbesondere metallischen, Werkstoffe der elektrisch leitfähigen Bauteile nicht mehr erreicht wird. Eine Korrosion der elektrisch leitfähigen Bauteile und die Ausbildung von störenden Korrosionsprodukten, welche mit einem strömenden Medium in angrenzenden Versorgungskanälen verteilt bzw. vom Entstehungsort wegtransportiert werden, wird somit zuverlässig vermieden. Es resultiert eine deutliche Verlängerung der Betriebsdauer der Brennstoffzellenanordnung und eine Verringerung von Störungen im Betrieb.

Die erfindungsgemäße Brennstoffzellenanordnung und das erfindungsgemäße Verfahren eignen sich für Brennstoffzellensysteme mit externer und interner Verteilerstruktur, insbesondere aber für eine Brennstoffzellenanordnung mit interner Verteilerstruktur, bei welcher die Versorgungskanäle, insbesondere für Kühl- und/oder Heizwasser und/oder für Brenn- und/oder Oxidationsgas usw., das Innere der Brennstoffzellenanordnung durchziehen bzw. darin integriert sind.

Je nach Bedarf kann lediglich einer der Anschlusskontakte oder aber beide Anschlusskontakte der Brennstoffzelleneinrichtung jeweils mit einem oder mehreren elektrisch leitfähigen Bauelementen zum Zwecke des Potentialsausgleichs elektrisch leitend verbunden sein.

Eine Anpassung eines elektrischen Potentials an einem elektrisch leitfähigen Bauteil an ein elektrisches Potential an einem Anschlusskontakt liegt gemäß der Erfindung vor, wenn an diesen das gleiche oder annähernd gleiche Potential vorliegt, wobei eine maximale Potentialdifferenz von etwa 3 V vorliegt.

Das mindestens eine weitere Bauteil ist insbesondere aus einem elektrisch isolierenden oder im Wesentlichen elektrisch isolierenden Material, wie Keramik, Kunststoff oder Glas, gebildet. Es bildet einen Isolationswiderstand zwischen einzelnen Bauteilen einer Brennstoffzellenanordnung, die Spannung führen (z.B. einem Anschlusskontakt), und elektrisch leitfähigen Elementen der Brennstoffzellenanordnung, die keine Spannung führen.

Bevorzugt werden gemäß der Erfindung all die elektrisch leitfähigen Bauteile auf das gleiche oder annähernd gleiche elektrische Potential eines Anschlusskontakts gelegt, die in einem Temperaturbereich, in welchem die Brennstoffzelle betrieben werden kann, betrieben werden und/oder von einem Anschlusskontakt oder einem auf dem gleichen elektrischen Potential wie ein Anschlusskontakt liegenden elektrisch leitfähigen Bauteil in einem Abstand - entlang eines den Anschlusskontakt und das jeweilige elektrische Bauteil verbindenden Versorgungskanals gerechnet - von bis zu 10 m entfernt angeordnet sind.

In einer bevorzugten Ausgestaltung der Brennstoffzellenanordnung ist der mindestens eine Versorgungskanal zum Transport eines fluiden Mediums in Form von Wasser und/oder Wasserdampf und/oder eines Wasserdampf-haltigen Gases eingerichtet und erstreckt sich durch die mindestens eine Baugruppe und die mindestens eine Brennstoffzelleneinrichtung hindurch. Nachdem Wasser oder wasserdampfhaltige Medien den Isolationswiderstand zwischen voneinander beabstandeten, jedoch beide in Kontakt zu dem Medium stehenden elektrisch leitfähigen Bauteilen stark vermindert, besteht hier die Gefahr der Ausbildung besonders hoher Leckströme und in Folge korrosiver Beeinflussungen. Der erfindungsgemäße Potentialausgleich zwischen dem ersten Anschlusskontakt und dem mindestens einen elektrisch leitenden Bauteil führt dazu, dass der Leckstrom über das Medium vermindert oder unterbunden wird und ein effektiver Schutz der elektrisch leitfähigen Bauteile vor Korrosion gegeben ist.

Die Erfindung ist insbesondere auch dann anwendbar, wenn die mindestens eine Baugruppe mindestens zwei elektrisch leitfähige Bauteile und mindesten zwei weitere Bauteile aufweist, wobei ein elektrisch leitfähiges Bauteil zwischen zwei weiteren Bauteilen und/oder ein weiteres Bauteil zwischen zwei elektrisch leitfähigen Bauteilen angeordnet ist/sind. In einem solchen Fall wird vorzugsweise das elektrische Potential an einem jeden vorhandenen elektrisch leitfähigen Bauteil an das elektrische Potential, welches am ersten Anschlusskontakt vorherrscht, angepasst. Dadurch wird eine Ausbildung eines Leckstroms und in Folge eine Korrosion an allen vorhandenen elektrisch leitfähigen Bauteilen unterbunden oder weitgehend verhindert.

Bei einer derartigen abwechselnden Aneinanderreihung von elektrisch leitfähigen und elektrisch isolierenden oder im Wesentlichen elektrisch isolierenden weiteren Bauteilen werden die leitfähigen Bauteile seriell und/oder parallel elektrisch leitend miteinander verbunden und mit dem ersten Anschlusskontakt und/oder der mindestens einen Spannungsversorgung verbunden.

Es hat sich bewährt, wenn der erste Anschlusskontakt und das mindestens eine elektrisch leitfähige Bauteil mittels mindestens eines elektrisch leitfähigen Brückenelements miteinander verbunden sind.

Dabei hat es sich bewährt, dass elektrisch leitfähige Brückenelement aus Metall, einer Metalllegierung, einem elektrisch leitfähigen Kunststoff, Kohle, Graphit oder einem elektrisch leitendem Verbundwerkstoff, beispielsweise auf Basis von Metall und Kunststoff, Graphit und Kunststoff oder Kohle und Kunststoff, auszubilden.

Brückenelemente aus Metall oder Metalllegierungen werden dabei bevorzugt in Form von Drähten, Blechen, Geflechten, Gestricken, Geweben, mechanischen Federn oder Blechteilen mit federnden Ausbuchtungen ausgebildet. Brückenelemente aus Kohle werden insbesondere in Form von Kohlepapier, Brückenelemente aus Graphit insbesondere in Form von Graphitfilz oder Elektrodengraphit verwendet. Brückenelemente aus elektrisch leitfähigen Kunststoffen sind vorzugsweise aus mit Graphit und/oder Metall gefüllten Kunststoffen gebildet.

Es hat sich als Vorteil erwiesen, wenn das mindestens eine elektrisch leitfähige Brückenelement den ersten Anschlusskontakt und das mindestens eine elektrisch leitfähige Bauteil an einem Umfang und/oder im Inneren der mindestens einen Brennstoffzelleneinrichtung und der mindestens einen Baugruppe miteinander verbindet. Ein an der Außenseite bzw. an der Oberfläche der Brennstoffzelleneinrichtung und der mindestens einen Baugruppe angeordnetes Brückenelement ist leicht zugänglich und kann auch nachträglich einfach montiert werden. Als besonders geeignete Brückenelemente haben sich hierbei Metalldrähte, Bleche, Metallgeflechte usw. erwiesen.

Dabei hat es sich ebenfalls bewährt, wenn das mindestens eine elektrisch leitfähige Brückenelement als ein Abstandshalter aus einem elektrisch leitfähigen Material, beispielsweise einem elektrisch leitenden Kunststoff oder einer elektrisch leitenden Keramik, ausgebildet ist und den ersten Anschlusskontakt mit dem mindestens einen elektrisch leitfähigen Bauteil verbindet. Ein derartiger Abstandshalter ist bevorzugt in Form einer Dichtung, insbesondere einer Flachdichtung, ausgebildet. Ein solcher Abstandshalter kann sich dabei im Bereich des Umfangs der Brennstoffzellenanordnung befinden und von außen zugänglich sein, sich in das Innere der Brennstoffzellenanordnung erstrecken und/oder sich von außen unzugänglich im Inneren der Brennstoffzellenanordnung erstrecken.

Genauso hat es sich bewährt, wenn mittels des mindestens einen elektrisch leitfähigen Brückenelements der erste Anschlusskontakt durch mindestens einen separaten Kanal oder einen Versorgungskanal hindurch mit dem mindestens einen elektrisch leitfähigen Bauteil verbunden ist. Das mindestens eine Brückenelement ist in diesem Fall innerhalb der Brennstoffzelleneinrichtung(en) und Baugruppe(n) angeordnet, und somit von außen nicht unmittelbar zugänglich. Dies ist insbesondere beim Neuaufbau von Brennstoffzellenanordnungen von Vorteil, bei dem die einzelnen Bauteile zusammengefügt werden. Die äußeren Abmessungen der Brennstoffzellenanordnung werden durch in Kanäle oder Versorgungskanäle integrierte Brückenelemente nicht verändert. Dies ermöglicht eine platzsparende und miniaturisierte Ausgestaltung eines Potentialausgleichs.

Ein Versorgungskanal wird von einem fluiden Medium durchströmt, so dass ein darin eingebautes Brückenelement dafür durchlässig ausgestaltet sein muss und den Fluidstrom nur unwesentlich behindern darf. Ein einfacher Kanal wird dagegen nicht durchströmt, so dass ein darin eingebautes Brückenelement keine Durchströmbarkeit aufweisen muss.

Die mindestens eine Brennstoffzelle auf Basis eines Feststoffelektrolyten ist vorzugsweise eine sogenannte planare Brennstoffzelle mit einem planaren Feststoffelektrolyten, an dessen eine Seite eine schichtförmige Anode und an dessen andere Seite eine schichtförmige Kathode angrenzen. Die beiden Elektroden bilden zusammen mit dem Elektrolyten eine sogenannte Elektrolyt-Elektroden-Einheit.

Es ist von Vorteil, wenn die mindestens eine Baugruppe der Brennstoffzellenanordnung mindestens eine Befeuchtungseinrichtung, insbesondere eine planare Befeuchtungseinrichtung, umfasst, welche mindestens ein elektrisch leitfähiges Bauteil aus Metallblech, insbesondere ein Heizelement, aufweist. Das Heizelement wird insbesondere von einem Versorgungskanal durchzogen, durch welchen aufgeheiztes Kühlwasser aus der Brennstoffzelleneinrichtung leitbar ist.

Bevorzugt weist die Befeuchtungseinrichtung mindestens einen Membranbefeuchter, vorzugsweise eine Anzahl von Membranbefeuchtern, auf. Ein Membranbefeuchter ist insbesondere als planare Befeuchtungszelle ausgestaltet, welche einen Betriebsgasraum, einen Befeuchtungswasserraum und eine zwischen beiden Räumen angeordnete wasserdurchlässige Membran umfasst. Dabei wird einer jeden wasserdurchlässigen Membran, vorzugsweise mindestens ein Heizelement aus Metallblech zugeordnet. Die Heizelemente aus Metallblech fungieren hier insbesondere als elektrisch leitfähige Bauteile, die durch wasserdurchlässige Membranen, welche üblicherweise aus einem elektrisch isolierenden Werkstoff gebildet sind und insbesondere als weitere Bauteile fungieren, voneinander und vom ersten Anschlusskontakt getrennt angeordnet sind. Eine Angleichung des elektrischen Potentials an einem jeden der Heizelemente an das elektrische Potential am ersten Anschlusskontakt führt zu einer deutlichen Verminderung einer Korrosion an den Heizelementen.

Bevorzugt wird ein elektrisch leitfähiges Brückenelement mit einem jeden Heizelement und schließlich dem ersten Anschlusskontakt und/oder mindestens einer Spannungsquelle verbunden.

Es hat sich bewährt, wenn die mindestens eine Baugruppe der Brennstoffzellenanordnung mindestens ein elektrisch leitfähiges Bauteil in Form einer metallischen Rohrleitung umfasst. Der Durchmesser und die Länge einer solchen metallischen Rohrleitung kann aufgrund des Potentialausgleichs zwischen dem ersten Anschlusskontakt und der Rohrleitung weitgehend frei gewählt werden. Eine solche Rohrleitung wird bevorzugt zur Einspeisung von Wasser in eine Brennstoffzelleneinrichtung und/oder eine Befeuchtereinrichtung verwendet.

Es ist weiterhin von Vorteil, wenn die mindestens eine Brennstoffzelleneinrichtung und die mindestens eine Baugruppe in einem, insbesondere metallischen, Container elektrisch isoliert vom Container angeordnet sind. Der Container fungiert als Berührungsschutz, nachdem aufgrund des Potentialausgleichs zwischen dem ersten Anschlusskontakt der Brennstoffzelleneinrichtung und dem mindestens einen elektrisch leitfähigen Bauteil nun auch vormals nicht Spannung führende Bauteile unter Spannung stehen und vor einer Berührung geschützt angeordnet werden müssen.

Die erfindungsgemäße Brennstoffzellenanordnung weist vorzugsweise eine Brennstoffzelleneinrichtung und/oder eine Befeuchtungseinrichtung auf, wie sie in der WO 03/030287 A2 oder WO 03/030288 A2 beschrieben sind.

Als Material zur Ausbildung des Feststoffelektrolyten innerhalb der Elektrolyt-Elektroden-Einheit einer Brennstoffzelle wird insbesondere ein Polymer verwendet. Besonders bevorzugt ist hier das Polymer mit der Bezeichnung NAFION der Firma Du-Pont aus Wilmington, Delaware. Es ist weiterhin bevorzugt, wenn eine wasserdurchlässige Membran eines planaren Membranbefeuchters aus dem gleichen Material gebildet wird.

Die Figuren 1a bis 7c sollen die erfindungsgemäße Brennstoffzellenanordnung sowie das erfindungsgemäße Verfahren beispielhaft erläutern. So zeigt:
- FIG 1a: schematisch eine Brennstoffzellenanordnung gemäß dem Stand der Technik mit einer Brennstoffzelleneinrichtung und einer Baugruppe in Form einer Befeuchtungseinrichtung;
- FIG 1b: ein elektrisches Ersatzschaltbild der Brennstoffzellenanordnung gemäß FIG 1a;
- FIG 2a: schematisch eine erfindungsgemäße Brennstoffzellenanordnung auf Basis einer Brennstoffzellenanordnung gemäß FIG 1a;
- FIG 2b: ein elektrisches Ersatzschaltbild der Brennstoffzellenanordnung gemäß FIG 2a;
- FIG 3a: schematisch eine weitere erfindungsgemäße Brennstoffzellenanordnung mit einer Brennstoffzelleneinrichtung und einer Baugruppe in Form einer Befeuchtungseinrichtung;
- FIG 3b: ein elektrisches Ersatzschaltbild der Brennstoffzellenanordnung gemäß FIG 3a;
- FIG 4: einen Querschnitt durch einen Ausschnitt aus der Brennstoffzellenanordnung gemäß FIG 3a im Bereich der Befeuchtungseinrichtung;
- FIG 5a: schematisch eine weitere Brennstoffzellenanordnung gemäß dem Stand der Technik mit einer Brennstoffzelleneinrichtung und zwei Baugruppen in Form von Befeuchtungseinrichtungen;
- FIG 5b: ein elektrisches Ersatzschaltbild der Brennstoffzellenanordnung gemäß FIG 5a;
- FIG 6a: schematisch eine erfindungsgemäße Brennstoffzellenanordnung auf Basis der Brennstoffzellenanordnung gemäß FIG 5a;
- FIG 6b: ein elektrisches Ersatzschaltbild der Brennstoffzellenanordnung gemäß FIG 6a;
- FIG 7a: einen Querschnitt durch einen Kanal oder Versorgungskanal mit darin angeordneten elektrisch leitfähigen Brückenelementen;
- FIG 7b: einen Querschnitt durch einen Kanal oder Versorgungskanal mit weiteren darin angeordneten elektrisch leitfähigen Brückenelementen; und
- FIG 7c: einen Querschnitt durch einen Bereich einer Brennstoffzellenanordnung mit elektrisch leitfähigen Brückenelementen in Form von Abstandhaltern.

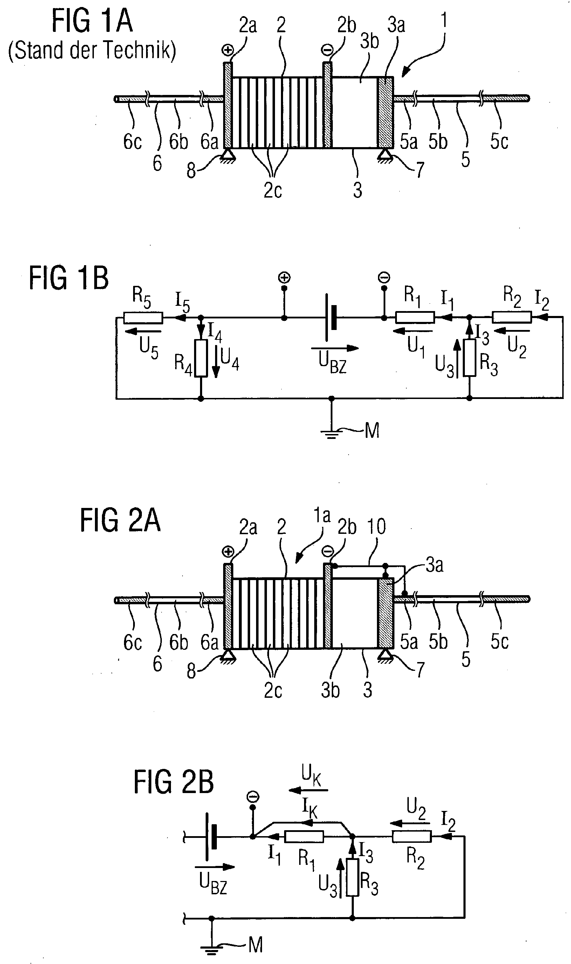

FIG 1a zeigt schematisch eine Brennstoffzelleneinrichtung 1 gemäß dem Stand der Technik mit einer Brennstoffzelleneinrichtung 2 und einer Baugruppe in Form einer Befeuchtungseinrichtung 3. Die Brennstoffzellenanordnung 1 ist elektrisch isoliert auf zwei Auflagern 7, 8 gelagert. Die Brennstoffzelleneinrichtung 2 umfasst zwei Anschlusskontakte 2a, 2b sowie einen Stapel planarer Brennstoffzellen 2c, welche jeweils eine Elektroden-Elektrolyt-Einheit auf Basis eines Feststoffelektrolyten aufweisen. Der Aufbau der Brennstoffzelleneinrichtung 2 ist dabei lediglich schematisch dargestellt und dem Fachmann bereits hinreichend bekannt.

Die beiden Anschlusskontakte 2a, 2b sind in Form von elektrisch leitfähigen, insbesondere metallischen, Polplatten bereitgestellt. Die Befeuchtungseinrichtung 3 weist elektrisch leitfähige Bauteile 3a und weiterhin elektrisch isolierende weitere Bauteile 3b auf. An die Befeuchtungseinrichtung 3 ist eine Versorgungsleitung 5 angeschlossen, welche die Befeuchtungseinrichtung 3 sowie die Brennstoffzelleneinrichtung 2 mit einem fluiden Medium, hierbei beispielsweise in Form von Wasser, versorgt. Auf der, der Versorgungsleitung 5 abgewandten Seite der Brennstoffzelleneinrichtung 2 ist eine weitere Versorgungsleitung 6 angeordnet, durch welche das fluide Medium abgeleitet wird. Die Anordnung der Versorgungsleitungen 5, 6 ist hierbei lediglich schematisch dargestellt und kann auch in völlig anderer Weise erfolgen. Weiterhin sind die Versorgungsleitungen 5, 6 stellvertretend für alle erforderlichen Versorgungsleitungen zum Betrieb der Brennstoffzellenanordnung dargestellt, wie beispielsweise einer Versorgungsleitung für Brenngas, einer Versorgungsleitung für Oxidationsgas usw. Auf die Darstellung weiterer Versorgungsleitungen wurde hier jedoch der Übersichtlichkeit halber verzichtet. Die Versorgungsleitung 5 weist unterschiedliche Teilstücke auf, wobei das Teilstück 5a aus Metall gebildet ist, das Teilstück 5b aus einem elektrisch isolierenden Material, wie beispielsweise Kunststoff oder Keramik gebildet ist und das Teilstück 5c wieder aus Metall gebildet ist. Die Versorgungsleitung 6 ist wie die Versorgungsleitung 5 aufgebaut, wobei das Teilstück 6a aus Metall gebildet ist, das Teilstück 6b aus einem elektrisch isolierenden Material, wie beispielsweise Kunststoff oder Keramik, gebildet ist und das Teilstück 6c wieder aus Metall gebildet ist. Generell können die Versorgungsleitungen 5, 6 lediglich an einer Seite der Brennstoffzellenanordnung 1 angeordnet sein oder, wie dargestellt, an gegenüberliegenden Seiten der Brennstoffzellenanordnung 1 angeschlossen sein.

FIG 1b zeigt ein elektrisches Ersatzschaltbild der Brennstoffzellenanordnung 1 gemäß FIG 1a. Die Brennstoffzelleneinrichtung 2 wird dabei durch einen Akkumulator dargestellt, der die Spannung U_{BZ} bereitstellt. Die beiden Anschlusskontakte 2a, 2b werden über die Plus- und Minuskontakte dargestellt. Die Befeuchtungseinrichtung 3 inklusive des Teilabschnitts 5a der Versorgungsleitung 5 ist mittels eines ohmschen Widerstandes R1 dargestellt, durch welchen ein Strom I₁ fließt und an welchem eine Spannung U₁ abfällt. Die Teilstücke 5b und 5c der Versorgungsleitung 5 sind durch einen ohmschen Widerstand R₂ dargestellt, durch welchen ein Strom I₂ fließt und an dem eine Spannung U₂ abfällt. Das Auflager 7 ist über einen ohmschen Widerstand R₃ dargestellt, über welchen ein Strom I₃ fließt und an dem eine Spannung U₃ abfällt. Das Auflager 8 ist über einen ohmschen Widerstand R₄ repräsentiert, über welchen ein Strom I₄ fließt und an dem eine Spannung U₄ abfällt. Die Teilstücke 6b und 6c der Versorgungsleitung 6 sind durch einen ohmschen Widerstand R₅ dargestellt, durch welchen ein Strom I₅ fließt und an dem eine Spannung U₅ abfällt. Zwischen dem Widerstand R₃ und dem Widerstand R₄ ist ein Masseanschluss M vorgesehen. Bei einem konstanten Wert für den ohmschen Widerstand R₁ hängt der Strom I₁ davon ab, ob die ohmschen Widerstände R₂ und R₃ hoch oder niedrig sind. Sind sie hoch, bestimmen sie den Strom I₁, welcher dann entsprechend niedrig ist.

Bei einem niedrigen Strom I₁ fällt an dem ohmschen Widerstand R₁ eine geringe Spannung ab. Sind jedoch die ohmschen Widerstände R₂ und R₃ niedrig verglichen mit dem ohmschen Widerstand R₁, dann fließt ein vergleichsweise hoher Strom I₁, der an der Befeuchtungseinrichtung 3 einen hohen Spannungsabfall verursacht. Erreicht die Spannung U₁ das Korrosionspotential der Werkstoffe der elektrisch leitfähigen Bauteile 3a bzw. 5a, so können sich an diesen Korrosionserscheinungen zeigen. Die gebildeten Korrosionsprodukte werden von dem fluiden Medium, welches mittels der Versorgungsleitung 5 in einem Versorgungskanal in die Befeuchtungseinrichtung 3 und in die Brennstoffzelleneinrichtung 2 gespeist wird, weitergetragen und führen an andere Stelle, beispielsweise in einer Brennstoffzelle 2c, zu Verstopfungen oder anderen unerwünschten Auswirkungen, wie beispielsweise einer Vergiftung der Elektroden, einer Erniedrigung der Ionenleitfähigkeit des Elektrolyten usw. Die Menge der gebildeten Korrosionsprodukte hängt dabei von der Höhe des Stroms I₁ ab, wobei sich im Bereich von wenigen mA bereits unerwünschte Mengen an Korrosionsprodukten bilden.

FIG 2a zeigt nun schematisch eine erfindungsgemäße Brennstoffzellenanordnung 1a, welche auf Basis der Brennstoffzellenanordnung 1 gemäß FIG 1a gebildet wurde. Die Brennstoffzellenanordnung 1a weist ein elektrisch leitfähiges Brückenelement 10 auf, welches den ersten Anschlusskontakt 2b mit dem elektrisch leitfähigen Bauteil 3a der Befeuchtungseinrichtung 3 sowie dem elektrisch leitfähigen Teilabschnitt 5a der Versorgungsleitung 5 verbindet. Mittels des elektrisch leitfähigen Brückenelements 10 wird das elektrische Potential an dem elektrisch leitfähigen Bauteil 3a und dem elektrisch leitfähigen Teilabschnitt 5a an das elektrische Potential am Anschlusskontakt 2b angeglichen. Das elektrisch leitfähige Brückenelement 10 ist hier in Form eines Metalldrahts ausgeführt.

FIG 2b zeigt einen Ausschnitt eines elektrischen Ersatzschaltbilds der Brennstoffzellenanordnung 1a gemäß FIG 2a. Das Ersatzschaltbild (rechter Zweig) gleicht im Wesentlichen dem Ersatzschaltbild gemäß FIG 1b (rechter Zweig), wobei nun das elektrisch leitfähige Brückenelement 10 den ohmschen Widerstand R₁ überbrückt. Über das Brückenelement 10 fließt ein Kurzschlussstrom Iₖ, so dass der Stromfluss über den ohmschen Widerstand R₁ vollständig oder nahezu vollständig unterbunden wird. Somit kann es zu keiner Korrosion an dem elektrisch leitfähigen Bauteil 3a bzw. an dem elektrisch leitfähigen Teilabschnitt 5a der Versorgungsleitung 5 mehr kommen.

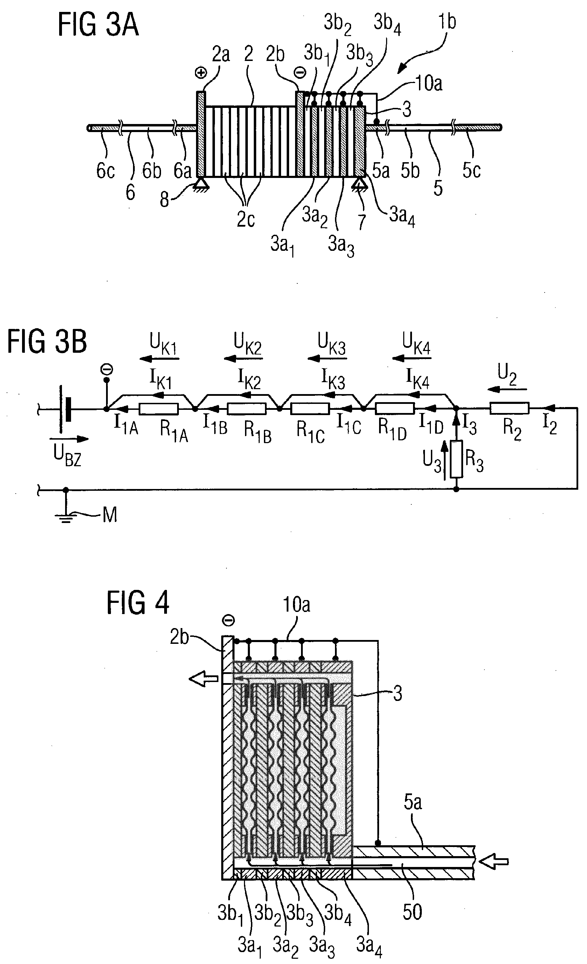

FIG 3a zeigt schematisch eine weitere erfindungsgemäße Brennstoffzellenanordnung 1b mit einer Brennstoffzelleneinrichtung 2 und einer Baugruppe in Form einer Befeuchtungseinrichtung 3. Die Befeuchtungseinrichtung 3 weist in diesem Ausführungsbeispiel nicht nur ein elektrisch leitfähiges Bauteil auf, sondern eine Abfolge von elektrisch leitfähigen Bauteilen 3a₁, 3a₂, 3a₃, 3a₄, beispielsweise in Form von metallischen Heizelementen, wie sie bei Membranbefeuchtern häufig verwendet werden. Zwischen den elektrisch leitfähigen Bauteilen 3a₁, 3a₂, 3a₃, 3a₄, befinden sich elektrisch weniger leitfähige weitere Bauteile bzw. elektrisch isolierende weitere Bauteile 3b₁, 3b₂, 3b₃, 3b₄, beispielsweise in Form von wasserdurchlässigen Membranen oder elektrisch isolierenden Dichtungen. Die elektrisch leitfähigen Bauteile 3a₁, 3a₂, 3a₃, 3a₄, sind durch ein elektrisch leitfähiges Brückenelement 10a mit dem ersten Anschlusskontakt 2b verbunden. Das elektrisch leitfähige Brückenelement 10a ist hier in Form eines Metalldrahts ausgeführt. Hinsichtlich einer detaillierten Darstellung des Aufbaus der Befeuchtungseinrichtung 3 siehe auch FIG

FIG 3b zeigt nun einen Ausschnitt aus dem elektrischen Ersatzschaltbild der Brennstoffzellenanordnung 1b (rechter Zweig) gemäß FIG 3a. Das elektrisch isolierende weitere Bauteil 3b₁ ist hier durch den ohmschen Widerstand R₁ₐ repräsentiert, dass elektrisch isolierende weitere Bauteil 3b₂ ist durch den ohmschen Widerstand R_{1b} repräsentiert, dass elektrisch isolierende weitere Bauteil 3b₃ ist durch den ohmschen Widerstand R_{1c} repräsentiert und das elektrisch isolierende weitere Bauteil 3b₄ ist durch den ohmschen Widerstand R_{1d} repräsentiert. Das in FIG 3a dargestellte elektrisch leitfähige Brückenelement 10a zwischen den elektrisch leitfähigen Bauteilen 3a₁, 3a₂, 3a₃, 3a₄ und dem ersten Anschlusskontakt 2b führt dazu, dass die Widerstände R₁ₐ, R_{1b}, R_{1c}, R_{1d} überbrückt werden. Über das elektrisch leitfähige Brückenelement 10a fließt ein Kurzschlussstrom Iₖ, welcher sich an jedem der Widerstände R₁ₐ, R_{1b}, R_{1c}, R_{1d} in Abhängigkeit vom jeweiligen Widerstand einstellt.

Nachdem in diesem Ausführungsbeispiel die ohmschen Widerstände R₁ₐ, R_{1b}, R_{1c}, R_{1d} weitgehend den gleichen Wert aufweisen, bildet sich in dem elektrisch leitfähigen Brückenelement 10a im jeweiligen Überbrückungsbereich ein gleicher Kurzschlussstrom Iₖ₁, Iₖ₂, Iₖ₃ , Iₖ₄ aus. An dem Brückenelement 10a, dessen Widerstand erheblich unter dem der elektrisch isolierenden Bauteile 3b₁, 3b₂, 3b₃, 3b₄ liegt, fällt eine Spannung Uₖ₁ ...... Uₖₙ ab, die keine Korrosion mehr an den elektrisch leitfähigen Bauteilen 3a₁, 3a₂, 3a₃, 3a₄ verursacht. Die Lebensdauer der Brennstoffzellenanordnung 1b wird verlängert.

FIG 4 zeigt einen Ausschnitt aus der Brennstoffzellenanordnung 1b gemäß FIG 3a. Dargestellt ist der Bereich zwischen dem elektrisch leitfähigen Teilabschnitt 5a der Versorgungsleitung 5 und dem ersten Anschlusskontakt 2b der Brennstoffzelleneinrichtung 2 in einer Schnittdarstellung. Dabei ist erkennbar, dass in dem elektrisch leitfähigen Teilabschnitt 5a der Versorgungsleitung 5 ein Versorgungskanal 50 angeordnet ist, über welchen ein fluides Medium in die Befeuchtungseinrichtung 3 einspeisbar ist(siehe Pfeil). Die elektrisch leitfähigen Bauteile 3a₁, 3a₂, 3a₃, 3a₄, sind voneinander mittels der weiteren elektrisch isolierenden Bauteile 3b₁, 3b₂, 3b₃, 3b₄, getrennt und weiterhin vom ersten Anschlusskontakt 2b isoliert, solange das fluide Medium fehlt. Wird jedoch das fluide Medium eingespeist, so können sich zwischen den elektrisch leitfähigen Bauteilen 3a₁, 3a₂, 3a₃, 3a₄, und dem ersten Anschlusskontakt 2b Korrosionsströme ausbilden, sofern das erfindungsgemäß vorgesehene elektrisch leitfähige Brückenelement 10a in Form eines Metalldrahts weggelassen wird.

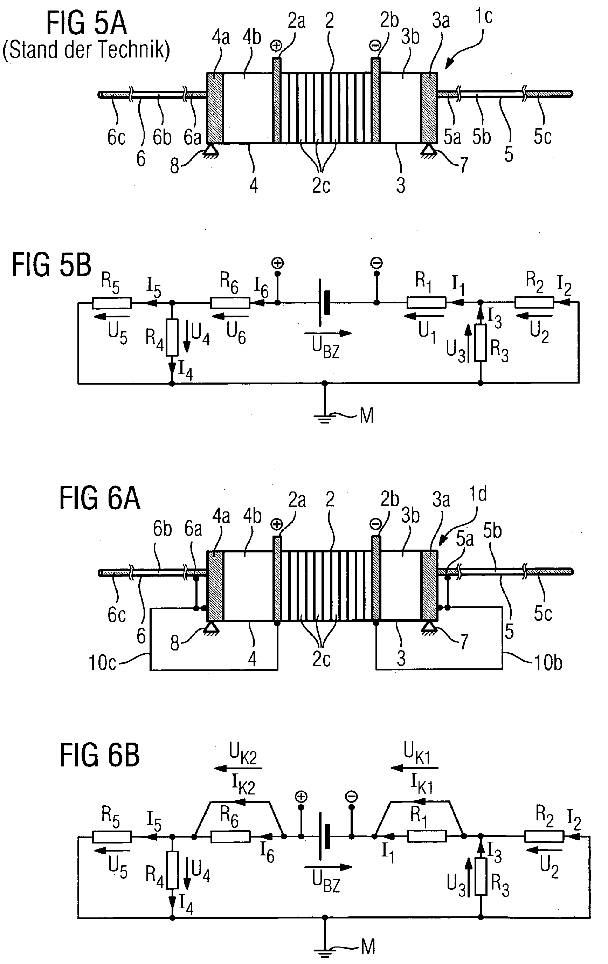

FIG 5a zeigt schematisch eine weitere Brennstoffzellenanordnung 1c gemäß dem Stand der Technik mit einer Brennstoffzelleneinrichtung 2 und zwei Baugruppen in Form von-Befeuchtungseinrichtungen 3, 4. Dabei ist die Befeuchtungseinrichtung 4 im Wesentlichen aufgebaut wie die Befeuchtungseinrichtung 3 gemäß den Figuren 1a bzw. 2a.

FIG 5b zeigt ein elektrisches Ersatzschaltbild der Brennstoffzellenanordnung 1c gemäß FIG 5a. Während der rechte Teil des Ersatzschaltbildes dem rechten Teil gemäß FIG 1b entspricht, ist im linken Teil des Ersatzschaltbildes die zweite Befeuchtungseinrichtung 4 in ähnlicher Weise dargestellt. Die zweite Befeuchtungseinrichtung weist ein elektrisch leitfähiges Bauteil 4a und ein weiteres, elektrisch isolierendes Bauteil 4b auf. Der ohmsche Widerstand R₆ repräsentiert dabei das elektrisch isolierende, weitere Bauteil 4b. Der ohmsche Widerstand R₅ repräsentiert im Wesentlichen die Teilabschnitte 6b und 6c einer Versorgungsleitung 6, wobei der Teilabschnitt 6b aus einem elektrisch isolierenden Material ausgebildet ist und der Teilabschnitt 6c aus einem elektrisch leitfähigen, insbesondere metallischen Material ausgebildet ist. Über den Widerstand R₅ fließt ein Strom I₅ und über den Widerstand R₆ fließt ein Strom I₆. Am Widerstand R₅ fällt eine Spannung U₅ ab und am Widerstand R₆ fällt eine Spannung U₆ ab. Der Widerstand R₄ repräsentiert, wie bereits in FIG 1b, das Auflager 8.

FIG 6a zeigt nun schematisch eine erfindungsgemäße Brennstoffzellenanordnung 1d, welche auf Basis der Brennstoffzellenanordnung 1c gemäß FIG 5a gebildet wurde. In diesem Ausführungsbeispiel ist das elektrisch leitfähige Bauteil 3a und der elektrisch leitfähige Teilabschnitt 5a der Versorgungsleitung 5 mittels eines elektrisch leitfähigen Brückenelements 10b mit dem ersten Anschlusskontakt 2b verbunden. Weiterhin ist das elektrisch leitfähige Bauteil 4a der zweiten Befeuchtungseinrichtung 4 sowie der elektrisch leitfähige Teilabschnitt 6a der Versorgungsleitung 6 mittels eines elektrisch leitfähigen zweiten Brückenelements 10c mit dem zweiten Anschlusskontakt 2a der Brennstoffzelleneinrichtung 2 verbunden. Das elektrisch leitfähige erste Brückenelement 10b und das elektrisch leitfähige zweite Brückenelement 10c sind hier in Form von Metalldrähten ausgeführt.

FIG 6b zeigt das elektrische Ersatzschaltbild der Brennstoffzellenanordnung 1d gemäß FIG 6a. Dabei ist erkennbar, dass mittels der beiden elektrisch leitfähigen Brückenelemente 10b, 10c die Befeuchtungseinrichtungen 3, 4 elektrisch überbrückt werden und somit die Ströme I₁ und I₆ vollständig oder nahezu vollständig vermieden werden. Eine Korrosion im Bereich der elektrisch leitfähigen Bauteile 3a, 5a, 4a, 6a wird zuverlässig verhindert und die Laufzeit der Brennstoffzellenanordnung 1d wesentlich verlängert.

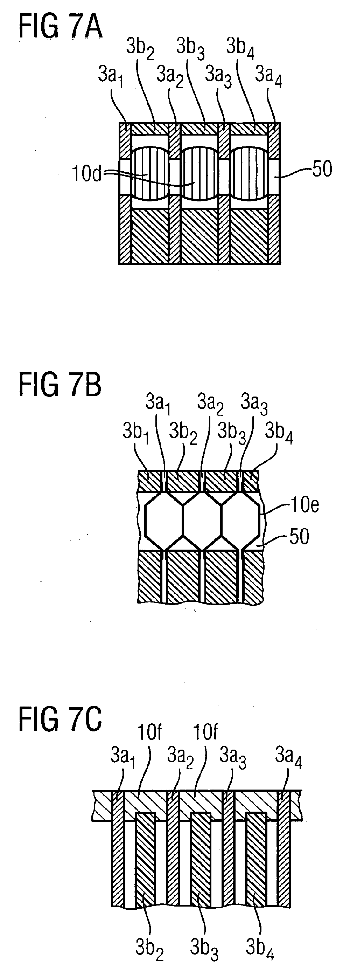

FIG 7a zeigt schematisch einen Querschnitt durch einen Kanal oder einen Versorgungskanal 50 mit darin angeordneten, elektrisch leitfähigen Brückenelementen 10d. Eine derartige Anordnung kann beispielsweise in einer Befeuchtungseinrichtung vorliegen, wobei auch hier die elektrisch leitfähigen Bauteile 3a₁, 3a₂, 3a₃, 3a₄ (vergleiche FIG 4) dargestellt sind, welche mittels der weiteren elektrisch isolierenden Bauteile 3b₁, 3b₂, 3b₃, 3b₄ voneinander getrennt sind. Die elektrisch leitfähigen Bauteile 3a₁, 3a₂, 3a₃, 3a₄ weisen dabei Durchlassöffnungen zur Ausbildung des Kanals oder des Versorgungskanals 50 auf, die geringfügig geringer dimensioniert sind als die Durchlassöffnungen zur Ausbildung des Kanals oder des Versorgungskanals 50 in den weiteren elektrisch isolierenden Bauteilen 3b₂, 3b₃, 3b₄. Die elektrisch leitfähigen Brückenelemente 10d sind, sofern diese in einem Versorgungskanal 50 angeordnet sind, durch das ein fluides Medium strömt, aus einem, für das fluide Medium durchlässigen Metallgestrick gebildet, welches sich zu beiden Seiten an einem elektrisch leitfähigen Bauteil 3a₁, 3b₁ abstützt und von diesen elastisch zusammengedrückt und gehalten wird. Bei Anordnung eines solchen elektrisch leitfähigen Brückenelements in einem internen Verteilersystem einer Brennstoffzellenanordnung ist allerdings darauf zu achten, dass durch die Anordnung des Brückenelements bzw. der Brückenelemente die Durchströmung des Versorgungskanals 50 nicht wesentlich behindert wird. Sind die elektrisch leitfähigen Brückenelemente 10d in einem einfachen, nicht durchströmten Kanal angeordnet, können diese auch für ein fluides Medium undurchlässig ausgebildet sein.

FIG 7b zeigt schematisch einen Querschnitt durch einen weiteren Kanal oder Versorgungskanal 50, in welchem weitere elektrisch leitfähige Brückenelemente 10e vorgesehen sind. In dieser Ausführungsform weisen die elektrisch leitfähigen Bauteile 3a₁, 3a₂, 3a₃ ein integriertes oder separates elektrisch leitfähiges Brückenelement 10e in Form einer federnd ausgebildeten Ausbuchtung auf. Die Brückenelemente 10e stoßen dabei innerhalb des Kanals oder Versorgungskanals 50 aneinander an und ermöglichen einen Potentialausgleich zwischen den elektrisch leitfähigen Bauteilen 3a₁, 3a₂, 3a₃. Die Brückenelemente 10e sind bei einer Anordnung in einem Versorgungskanal 50, durch welchen ein fluides Medium strömten soll, durchlässig und behindern die Strömung des Mediums nur unwesentlich. Eine solche Durchlässigkeit kann beispielsweise durch in den elektrisch leitfähigen Bauteilen 3a₁, 3a₂, 3a₃ im Bereich des Brückenelements 10e angeordnete Durchgangsöffnungen, Schlitze und dergleichen realisiert werden. Bei einer Anordnung des Brückenelements 10e in einem einfachen, nicht durchströmten Kanal ist eine Durchlässigkeit für ein fluides Medium nicht erforderlich.

Eine Vielzahl weiterer, in einem Kanal, welcher nicht von einem fluiden Medium durchströmt wird, oder einem von einem fluiden Medium durchströmten Versorgungskanal angeordneter elektrisch leitfähiger Brückenelemente sind als Alternativen zu den in den Figuren 7a und 7b dargestellten Brückenelementen verwendbar. Auch die Verbindung mittels eines einfachen Metalldrahts innerhalb oder außerhalb eines Kanals oder Versorgungskanals hat sich bewährt.

FIG 7c zeigt einen Querschnitt durch einen Bereich einer Brennstoffzellenanordnung umfassend elektrisch isolierende Beuteile 3b₂, 3b₃, 3b₄ und elektrisch leitende Bauteile 3a₁, 3a₂, 3a₃, 3a₄. Das elektrische Potential der elektrisch leitenden Bauteile 3a₁, 3a₂, 3a₃, 3a₄ ist mittels elektrisch leitfähiger Brückenelemente 10f in Form von Abstandhaltern, die aus einem mit Graphit gefüllten, elektrisch leitenden Kunststoff, insbesondere einem Elastomer, gebildet sind, aneinander angeglichen. Dabei fungieren die Abstandshalter als Flachdichtungen zwischen den elektrisch leitenden Bauteilen 3a₁, 3a₂, 3a₃, 3a₄ und fixierend die elektrisch isolierenden Bauteile 3b₂, 3b₃, 3b₄ in ihrer Lage.

Dem Fachmann ist in Kenntnis der vorliegenden Erfindung eine Abwandlung der dargestellten Ausführungsbeispiele möglich, ohne dabei den Erfindungsgedanken zu verlassen. So können ohne Weiteres anstelle von planaren Brennstoffzellen tubulare Brennstoffzellen usw. eingesetzt werden. Anstelle einer Befeuchtungseinrichtung kann ohne weiteres eine andere Baugruppe eingesetzt werden und/oder die Abfolge von elektrisch leitfähigen Bauteilen und weiteren, im Wesentlichen elektrisch isolierenden Bauteilen grundsätzlich verändert werden. Zudem kann die Anzahl von elektrisch leitfähigen Bauteilen und weiteren, im Wesentlichen elektrisch isolierenden Bauteilen variiert bzw. erhöht oder vermindert werden. Die Art eines Brückenelements kann ohne weiteres verändert werden, indem anstelle eines Metalldrahts beispielsweise ein Metallgestrick, leitfähige Keramik- oder Kunststoffteile usw. eingesetzt werden. Auch die dargestellten Dimensionen der Brennstoffzellenanordnung und deren Bestandteilen ist lediglich schematisch gewählt und lässt keine Rückschlüsse auf die tatsächlichen Größenabmessungen und Größenverhältnisse zu.

## Patentansprüche

1. Brennstoffzellenanordnung (1, 1a, 1b, 1c, 1d) umfassend:
- mindestens eine Brennstoffzelleneinrichtung (2) mit mindestens einer Brennstoffzelle (2c) auf Basis eines Feststoffelektrolyten, wobei mindestens zwei Anschlusskontakte (2a, 2b) zum Abgreifen einer von der Brennstoffzelleneinrichtung (2) erzeugten elektrischen Spannung vorhanden sind, zwischen welchen die mindestens eine Brennstoffzelle angeordnet ist,
- mindestens eine Baugruppe umfassend mindestens eine Befeuchtungseinrichtung (3, 4), welche mindestens ein elektrisch leitfähiges Bauteil in Form eines Heizelements aus Metallblech und mindestens ein weiteres Bauteil in Form einer wasserdurchlässigen Membran aus einem elektrisch isolierenden Werkstoff aufweist, wobei die mindestens eine wasserdurchlässige Membran zwischen einem ersten der Anschlusskontakte (2a, 2b) und dem mindestens einen Heizelement auf der, der mindestens einen Brennstoffzelle abgewandten Seite des ersten Anschlusskontakts angeordnet ist und eine geringere elektrische Leitfähigkeit aufweist als der erste der Anschlusskontakte (2a, 2b) und das mindestens eine Heizelement, und
- mindestens einen Versorgungskanal (50) zum Transport eines fluiden Mediums, der den ersten Anschlusskontakt mit dem mindestens einen Heizelement durch die mindestens eine wasserdurchlässige Membran hindurch verbindet, und wobei das mindestens eine Heizelement durch ein elektrisch leitfähiges Brückenelement (10, 10a, 10b, 10c, 10d, 10e, 10f) mit dem ersten Anschusskontakt und/oder mindestens einer Spannungsversorgung verbunden ist, wobei ein elektrisches Potential an dem mindestens einen Heizelement an ein am ersten Anschlusskontakt vorliegendes elektrisches Potential derart angleichbar ist, dass eine maximale Potentialdifferenz von 3 Volt zwischen dem mindestens einen Heizelement und dem ersten Anschlusskontakt vorliegt.

2. Brennstoffzellenanordnung nach Anspruch 1,
wobei der mindestens eine Versorgungskanal (50) zum Transport eines fluiden Mediums in Form von Wasser und/oder Wasserdampf und/oder eines Wasserdampf-haltigen Gases eingerichtet ist und sich durch die mindestens eine Baugruppe und die mindestens eine Brennstoffzelleneinrichtung (2) hindurch erstreckt.

3. Brennstoffzellenanordnung nach Anspruch 1 oder Anspruch 2,
wobei die mindestens eine Befeuchtungseinrichtung (3, 4) mindestens zwei Heizelemente und mindestens zwei wasserdurchlässige Membranen aufweist, wobei ein Heizelement zwischen zwei wasserdurchlässigen Membranen und/oder eine wasserdurchlässige Membran zwischen zwei Heizelementen angeordnet ist/sind.

4. Brennstoffzellenanordnung nach einem der Ansprüche 1 bis 3,
wobei das mindestens eine elektrisch leitfähige Brückenelement (10, 10a, 10b, 10c, 10d, 10e, 10f) aus Metall, einer Metalllegierung, einem elektrisch leitfähigen Kunststoff, Kohle, Graphit, oder einem elektrisch leitenden Verbundwerkstoff gebildet ist.

5. Brennstoffzellenanordnung nach Anspruch 4,
wobei das mindestens eine elektrisch leitfähige Brückenelement (10, 10a, 10b, 10c, 10f) den ersten Anschusskontakt und das mindestens eine Heizelement an einem Umfang und/oder im Inneren der mindestens einen Brennstoffzelleneinrichtung (2) und der mindestens einen Baugruppe miteinander verbindet.

6. Brennstoffzellenanordnung nach Anspruch 4,
wobei mittels des mindestens einen elektrisch leitfähigen Brückenelements (10d, 10e) der erste Anschusskontakt durch den mindestens einen Versorgungskanal (50) oder einen separaten Kanal hindurch mit dem mindestens einen Heizelementelektrisch leitend verbunden ist.

7. Brennstoffzellenanordnung nach einem der Ansprüche 1 bis 6,
wobei die mindestens eine Baugruppe weiterhin mindestens ein elektrisch leitfähiges Bauteil in Form einer metallischen Rohrleitung umfasst.

8. Brennstoffzellenanordnung nach einem der Ansprüche 1 bis 7,
wobei die mindestens eine Brennstoffzelleneinrichtung (2) und die mindestens eine Baugruppe elektrisch isoliert in einem Container angeordnet sind.

9. Brennstoffzellenanordnung nach einem der Ansprüche 1 bis 8,
wobei die mindestens eine Brennstoffzelle (2c) eine planare Brennstoffzelle ist.

10. Brennstoffzellenanordnung nach einem der Ansprüche 1 bis 9,
wobei diese eine interne Verteilerstruktur aufweist.

11. Verfahren zum Betreiben einer Brennstoffzellenanordnung (1, 1a, 1b, 1c, 1d), insbesondere nach einem der Ansprüche 1 bis 10,
wobei die Brennstoffzellenanordnung (1, 1a, 1b, 1c, 1d) mindestens eine Brennstoffzelleneinrichtung (2) mit mindestens einer Brennstoffzelle (2c) auf Basis eines Feststoffelektrolyten umfasst, wobei mindestens zwei Anschlusskontakte (2a, 2b) zum Abgreifen einer von der Brennstoffzelleneinrichtung (2) erzeugten elektrischen Spannung vorhanden sind, zwischen welchen die mindestens eine Brennstoffzelle angeordnet ist, weiterhin mindestens eine Baugruppe umfassend mindestens eine Befeuchtungseinrichtung (3, 4) umfasst, welche mindestens ein elektrisch leitfähiges Bauteil in Form eines Heizelements aus Metallblech und mindestens ein weiteres Bauteil in Form einer wasserdurchlässigen Membran aus einem elektrisch isolierenden Werkstoff aufweist, wobei die mindestens eine wasserdurchlässige Membran zwischen einem ersten der Anschlusskontakte (2a, 2b) und dem mindestens einen Heizelement auf der, der mindestens einen Brennstoffzelle abgewandten Seite des ersten Anschlusskontakts angeordnet ist und eine geringere elektrische Leitfähigkeit aufweist als der erste der Anschlusskontakte (2a, 2b) und das mindestens eine Heizelement , und mindestens einen Versorgungskanal (50) zum Transport eines fluiden Mediums umfasst, der den ersten Anschlusskontakt mit dem mindestens einen Heizelement durch die mindestens eine wasserdurchlässige Membran hindurch verbindet, wobei
das mindestens eine Heizelement durch ein elektrisch leitfähiges Brückenelement (10, 10a, 10b, 10c, 10d, 10e, 10f) mit dem ersten Anschusskontakt und/oder mindestens einer Spannungsversorgung verbunden wird, wobei ein elektrisches Potential an dem mindestens einen Heizelement an ein am ersten Anschlusskontakt vorliegendes elektrisches Potential angeglichen wird, indem eine maximale Potentialdifferenz von 3 Volt zwischen dem mindestens einen elektrisch leitfähigen Bauteil und dem ersten Anschlusskontakt eingestellt wird.

12. Verfahren nach Anspruch 11,
wobei als fluides Medium Wasser und/oder Wasserdampf und/oder ein Wasserdampf-haltiges Gas durch den mindestens einen Versorgungskanal (50) transportiert wird.

## Claims

1. Fuel cell assembly (1, 1a, 1b, 1c, 1d) comprising:
- at least one fuel cell device (2) having at least one solid electrolyte based fuel cell (2c), wherein at least two terminal contacts (2a, 2b) between which the at least one fuel cell is disposed are provided for tapping off an electrical voltage produced by the fuel cell device (2),
- at least one subassembly comprising at least one humidifying device (3, 4) which has at least one electrically conductive component in the form of a sheet metal heating element and at least one further component in the form of a water permeable membrane made of an electrically insulating material, wherein the at least one water permeable membrane is disposed between a first of the terminal contacts (2a, 2b) and the at least one heating element on the side of the first terminal contact facing away from the at least one fuel cell and has a lower electrical conductivity than the first of the terminal contacts (2a, 2b) and the at least one heating element, and
- at least one supply duct (50) for conveying a fluid medium which connects the first terminal contact to the at least one heating element through the at least one water permeable membrane, and wherein the at least one heating element is connected by an electrically conductive link (10, 10a, 10b, 10c, 10d, 10e, 10f) to the first terminal contact and/or at least one voltage supply, wherein an electrical potential at the at least one heating element is matched to an electrical potential present at the first terminal contact such that a maximum potential difference of 3 volts is present between the at least one heating element and the first terminal contact.

2. Fuel cell assembly according to claim 1,
wherein the at least one supply duct (50) is designed to convey a fluid medium in the form of water and/or steam and/or a steam-containing gas and extends through the at least one subassembly and the at least one fuel cell device (2).

3. Fuel cell assembly according to claim 1 or claim 2, wherein the at least one humidifying device (3, 4) has at least two heating elements and at least two water permeable membranes, wherein a heating element is disposed between two water permeable membranes and/or a water permeable membrane is disposed between two heating elements.

4. Fuel cell assembly according to one of claims 1 to 3, wherein the least one electrically conductive link (10, 10a, 10b, 10c, 10d, 10e, 10f) is made of metal, a metal alloy, an electrically conductive plastic, carbon, graphite or an electrically conducting composite material.

5. Fuel cell assembly according to claim 4,
wherein the at least one electrically conductive link (10, 10a, 10b, 10c, 10f) interconnects the first terminal contact and the at least one heating element on a periphery and/or in the interior of the at least one fuel cell device (2) and of the at least one subassembly.

6. Fuel cell assembly according to claim 4,
wherein by means of the at least one electrically conductive link (10d, 10e), the first terminal contact is connected in an electrically conducting manner to the at least one heating element through the at least one supply duct (50) or a separate duct.

7. Fuel cell assembly according to one of claims 1 to 6, wherein the at least one subassembly further comprises at least one electrically conductive component in the form of a metal conduit.

8. Fuel cell assembly according to one of claims 1 to 7, wherein the at least one fuel cell device (2) and the at least one subassembly are disposed in an electrically insulated manner in a container.

9. Fuel cell assembly according to one of claims 1 to 8, wherein the at least one fuel cell (2c) is a planar fuel cell.

10. Fuel cell assembly according to one of claims 1 to 9, wherein said fuel cell assembly has an internally manifolded stack.

11. Method for operating a fuel cell assembly (1, 1a, 1b, 1c, 1d), in particular according to one of claims 1 to 10, wherein the fuel cell assembly (1, 1a, 1b, 1c, 1d) comprises at least one fuel cell device (2) having at least one solid electrolyte based fuel cell (2c), wherein at least two terminal contacts (2a, 2b) between which the at least one fuel cell is disposed are provided for tapping off an electrical voltage produced by the fuel cell device (2), further comprises at least one subassembly comprising at least one humidifying device (3, 4) which has at least one electrically conductive component in the form of a sheet metal heating element and at least one further component in the form of a water permeable membrane made of an electrically insulating material, wherein the at least one water permeable membrane is disposed between a first of the terminal contacts (2a, 2b) and the at least one heating element on the side of the first terminal contact facing away from the at least one fuel cell and has a lower electrical conductivity than the first of the terminal contacts (2a, 2b) and the at least one heating element, and comprises at least one supply duct (50) for conveying a fluid medium which connects the first terminal contact to the at least one heating element through the at least one water permeable membrane, wherein
the at least one heating element is connected by an electrically conductive link (10, 10a, 10b, 10c, 10d, 10e, 10f) to the first terminal contact and/or at least one voltage supply, wherein an electrical potential at the at least one heating element is matched to an electrical potential present at the first terminal contact, in that a maximum potential difference of 3 volts is set between the at least one electrically conductive component and the first terminal contact.

12. Method according to claim 11,
wherein water and/or steam and/or a steam-containing gas is conveyed through the at least one supply duct (50) as a fluid medium.

## Revendications

1. Agencement (1, 1a, 1b, 1c 1d) de piles à combustible, comprenant :
- au moins un dispositif (2) de piles à combustible ayant au moins une pile (2c) à combustible à base d'un électrolyte solide, dans lequel il y a au moins deux contacts (2a, 2b) de connexion pour le prélèvement d'une tension électrique produite par le dispositif (2) de piles à combustible, entre lesquels la au moins une pile à combustible est montée,
- au moins un module comprenant au moins un dispositif (3, 4) d'humidification, qui a au moins un composant conducteur de l'électricité sous la forme d'un élément chauffant en une tôle métallique et au moins un autre composant sous la forme d'une membrane perméable à l'eau en un matériau isolant du point de vue électrique, la au moins une membrane perméable à l'eau étant disposée en un premier des contacts (2a, 2b) de connexion et le au moins un élément de chauffage du côté, éloigné de la au moins une piles à combustible, du premier contact de connexion et ayant une conductivité électrique plus petite que le premier des contacts (2a, 2b) de connexion et le au moins un élément de chauffage et
- au moins un conduit (50) d'alimentation pour le transport d'un milieu fluide, qui relie le premier contact de connexion au au moins un élément de chauffage en passant à travers la au moins une membrane perméable à l'eau, le au moins un élément de chauffage étant relié par un élément (10, 10a, 10b, 10c, 10d, 10e, 10f) de pont conducteur de l'électricité au premier contact de connexion et/ou à au moins une alimentation en tension, un potentiel électrique au au moins un élément de chauffage pouvant être mis au même niveau qu'un potentiel électrique présent au premier contact de connexion, de manière à avoir une différence de potentiel maximum de 3 volt entre au moins un élément de chauffage et le premier contact de connexion.

2. Agencement de piles à combustible suivant la revendication 1,
dans lequel le au moins un conduit (50) d'alimentation est conçu pour le transport d'un milieu fluide sous la forme d'eau et/ou de vapeur d'eau et/ou d'un gaz contenant de la vapeur d'eau et traverse le au moins un module et le au moins un dispositif (2) de piles à combustible.

3. Agencement de piles à combustible suivant la revendication 1 ou revendication 2,
dans lequel le au moins un dispositif (3, 4) d'humidification a au moins deux éléments de chauffage et au moins deux membranes perméables à l'eau, un élément de chauffage étant disposé entre deux membranes perméables à l'eau et/ou une membrane perméable à l'eau étant disposée entre deux éléments de chauffage.

4. Agencement de piles à combustible suivant l'une des revendications 1 à 3,
dans lequel le au moins un élément (10, 10a, 10b, 10c, 10d, 10e , 10f) de pont conducteur de l'électricité est en un métal, en un alliage métallique, en une matière plastique conductrice de l'électricité, en charbon, en graphite ou en un matériau composite conducteur de l'électricité.

5. Agencement de piles à combustible suivant la revendication 4,
dans lequel le au moins un élément (10, 10a, 10b, 10c, 10f) de pont conducteur de l'électricité relie entre eux le premier contact de connexion et le au moins un élément de chauffage sur un pourtour et/ou à l'intérieur du au moins un dispositif (2) de piles à combustible et du au moins un module.

6. Agencement de piles à combustible suivant la revendication 4,
dans lequel, au moyen du au moins un élément (10d, 10e) de pont conducteur de l'électricité, le premier contact de connexion est relié d'une manière conductrice de l'électricité au au moins un élément de chauffage par le au moins un conduit d'alimentation ou par un conduit distinct.

7. Agencement de piles à combustible suivant l'une des revendications 1 à 6,
dans lequel, le au moins un module comprend en outre au moins un composant conducteur de l'électricité sous la forme d'une ligne tubulaire métallique.

8. Agencement de piles à combustible suivant l'une des revendications 1 à 7,
dans lequel, le au moins un dispositif (2) de piles à combustible et le au moins un module sont disposés de manière isolée électriquement dans une enveloppe.

9. Agencement de piles à combustible suivant l'une des revendications 1 à 8,
dans lequel, la au moins une pile (2c) à combustible est une piles à combustible plane.

10. Agencement de piles à combustible suivant l'une des revendications 1 à 9,
dans lequel, celui-ci a une structure interne de répartiteur.

11. Procédé pour faire fonctionner un agencement (1, 1a, 1b, 1c 1d) de piles à combustible, notamment suivant l'une des revendications 1 à 10,
dans lequel l'agencement (1, 1a, 1b, 1c 1d) de piles à combustible comprend au moins un dispositif (2) de piles à combustible ayant au moins une pile (2c) à combustible à base d'un électrolyte solide, au moins deux contacts (2a, 2b) de connexion étant présents pour le prélèvement d'une tension électrique produite par le dispositif (2) de piles à combustible, entre lesquels la au moins une pile à combustible est montée, en outre au moins un module, comprenant au moins un dispositif (3, 4) d'humidification, qui a au moins un composant conducteur de l'électricité sous la forme d'un élément de chauffage en une tôle métallique et au moins un autre composant sous la forme d'une membrane perméable à l'eau en un matériau isolant du point de vue électrique, la au moins une membrane perméable à l'eau étant montée entre un premier des contacts (2a, 2b) de connexion et le au moins un élément de chauffage du côté, éloigné de la au moins une pile à combustible, du premier contact de connexion et ayant une conductivité électrique plus petite que le premier contact (2a, 2b) de connexion et le au moins un élément de chauffage et au moins un conduit (50) d'alimentation pour le transport d'un milieu fluide, qui relie le premier contact de connexion au au moins un élément de chauffage à travers la au moins une membrane perméable à l'eau, dans lequel
on relie le au moins un élément de chauffage par un élément (10, 10a, 10b, 10c, 10d, 10e, 10f) de pont conducteur de l'électricité au premier contact de connexion et/ou à au moins une alimentation en tension, un potentiel électrique sur le au moins un élément de chauffage étant mis au même niveau qu'un potentiel électrique présent sur le premier contact de connexion en réglant une différence de potentiel maximum de 3 volt entre le au moins un composant conducteur de l'électricité et le premier contact de connexion.

12. Procédé suivant la revendication 11, dans lequel on transporte comme milieu fluide de l'eau et/ou de la vapeur d'eau et/ou un gaz contenant de la vapeur d'eau dans le au moins un conduit (50) d'alimentation.
